# EUROPÄISCHE PATENTSCHRIFT

(11) **EP 1 257 744 B1**
(45) Veröffentlichungstag und Bekanntmachung des Hinweises auf die Patenterteilung: **13.04.2005**
(21) Anmeldenummer: 02714023.5
(22) Anmeldetag: 15.02.2002
(51) Int. Cl.: F16C 1/26

(54) **BEFESTIGUNGSVORRICHTUNG ZUR FESTLEGUNG EINES SEILZUGES**
FIXING DEVICE FOR SECURING AN ACTUATING CABLE
DISPOSITIF DE FIXATION POUR FIXER UN CABLE DE COMMANDE

(30) Priorität: 15.02.2001 DE 10107635
(43) Veröffentlichungstag der Anmeldung: 20.11.2002
(73) Patentinhaber: ZF Lemförder Metallwaren AG, 49441 Lemförde (DE)
(72) Erfinder: MEYER, Jörg, 49419 Wagenfeld (DE)
(86) Internationale Anmeldenummer: PCT/DE2002/000564
(87) Internationale Veröffentlichungsnummer: WO 2002/064985

(56) Entgegenhaltungen:
- EP-A- 1 026 411
- EP-A- 1 041 296
- JP-A- 2000 039 016
- US-A- 4 642 859
- US-B1- 6 178 844

## Beschreibung

Die Erfindung betrifft eine Befestigungsvorrichtung zur Festlegung eines Seilzuges an einer Schaltbetätigung oder einem Getriebe mit einem den Endbereich des Seilzuges ummantelnden Hüllenendstück und einem das Hüllenendstück aufnehmenden Aufnahmeelement an der Schaltbetätigung oder am Getriebe.

Befestigungsvorrichtungen der eingangs geschilderten Art werden vorzugsweise zur Festlegung von Seilzügen zur Übertragung von Bewegungen eines Schalthebels an ein zugehöriges KFZ-Getriebe eingesetzt. Bekannt sind hierbei Lösungen, in der die Befestigungsvorrichtung als so genannte Bajonett-Verbindung ausgebildet ist, bei der das Hüllenendstück und das zugehörige Aufnahmeelement in einer bestimmten Richtung zueinander ausgerichtet werden müssen, so dass die entsprechenden Wirkflächen an den einzelnen Bauteilen zur Festlegung des Seilzuges miteinander verrasten können und somit gegen Lösen gesichert sind. Problematisch ist bei derartigen Lösungen, dass in dem Falle, in dem der Seilzug während der Fertigung des Fahrzeuges frühzeitig montiert wird, oftmals nicht auf dessen Ausrichtung geachtet wird. Bei der nachfolgenden Montage des Getriebes und der Schaltvorrichtung kommt es aufgrund dessen immer wieder zu Problemen, da zum einen eine Nachjustierung des Seilzuges erfolgen muss, und zum anderen der Seilzug im verrasteten Zustand oftmals einer Vorspannung unterliegt.

Die EP 1 041 296 A1 offenbart eine Befestigungsvorrichtung zur Festlegung eines Seilzuges mit einem den Seilzug ummantelnden Hülsenendstück, wobei das Hülsenendstück ein umlaufende Nut aufweist. Es ist ferner ein Aufnahmeelement vorhanden, bei dem im festgelegten Zustand des Seilzuges seitliche Vorsprünge in die Nut eingreifen. Ferner ist an dem Aufnahmeelement ein Federelement festgelegt, in dem dieses in Ausnehmungen am Aufnahmeelement aufgenommen ist. Das geometrisch aufwendig gestaltete Federelement erstreckt sich aber nachteilig auf beide Seiten der Nutebene und beansprucht daher relativ viel Bauraum in axialer Richtung des Seilzuges. Zudem ist die Ausnehmung zur Aufnahme des Federelementes nur sehr schwer zu erzeugen, insbesondere wenn das Aufnahmeelement im Spritzverfahren hergestellt wird.

In der US 6, 178,844 B1 ist ein Hülsenendstück mit einer mehrfach abgesetzten umlaufenden Nut offenbart, auf welches vor der Festlegung an einem Aufnahmeelement ein sich über mehrere Ebene erstreckendes aufwendig dreidimensional gebogenes drahtförmiges Federelement aufgesteckt ist. Das Hülsenendstück wird zusammen mit dem Federelement in eine u-förmige Ausnehmung am Aufnahmeelement eingeführt, so dass aufnahmeseitige Vorsprünge in die Nut eingreifen, und dort mit dem Federelement verrastet. Das Federelement erstreckt sich im verrasteten Zustand auf beiden Seiten des Aufnahmeelementes und verspannt das Hülsenendstück sowohl radial als auch axial gegenüber dem Aufnahmeelement.

Die JP 2000-39016 A2 offenbart ebenfalls ein Hülsenendstück mit einer umlaufenden Nut, in welche im festgelegten Zustand Vorsprünge eines Aufnahmeelementes eingreifen. Nach Einsetzen des Hülsenendstückes in die u-förmige Ausnehmung am Aufnahmeelement wird ein aufwendig gestaltetes Federelement aufgesteckt, wobei seitliche Federzungen in die Nut eingreifen und so sowohl eine radiale als auch axiale Verspannung des Hülsenendstückes bewirken.

In der US 4,642,859 ist dagegen ein Hülsenendstück offenbart, dass in eine lochförmige Ausnehmung eines Aufnahmeelementes eingesetzt wird, so dass ein Anschlag des Hülsenendstückes am Aufnahmeelement anliegt. Anschließend wird ein wiederum sehr aufwendig und dreidimensional gestaltetes Federelement auf das Hülsenendstück aufgesteckt, derart, dass zwei Federzungen in eine umlaufenden Nut am Hülsenendstück eingreifen und dieses gegenüber dem Aufnahmeelement festsetzen.

In der EP 1 026 411 A2 ist ein Hülsenendstück mit einer umlaufenden und ihre Breite veränderlichen Nut gezeigt, welches in eine u-förmige Ausnehmung eines Aufnahmeelementes eingesetzt wird. Das Federelement ist hier eine sich axial erstreckende Schraubenfeder, die ein in der Nut verschieblich angeordnetes Ringelelement gegen das Aufnahmeelement drückt und so lediglich eine axiale Festlegung des Hülsenendstückes darstellt. Eine radiale formschlüssige Festlegung des Hülsenendstückes ist nicht gezeigt.

Aufgabe der vorliegenden Erfindung ist es daher, eine Befestigungsvorrichtung der gattungsgemäßen Art dahingehend weiterzubilden, dass unter allen Montagerahmenbedingungen eine problemlose Festlegung des Seilzuges an der Schaltvorrichtung des Getriebes ermöglicht wird, und darüber hinaus eine Befestigungsvorrichtung geschaffen wird, die aufgrund ihrer einfachen Gestaltung und ihrer wenigen Bauteile eine kostengünstige Fertigung gestattet.

Diese Aufgabe wird zusammen mit den gattungsbildenden Merkmalen durch die technische Lehre des kennzeichnenden Teils des Anspruches 1 gelöst.

Die technische Lehre sieht dabei vor, dass das Hüllenendstück eine umlaufende Nut und das Aufnahmeelement mindestens einen im festgelegten Zustand des Seilzuges in der Nut in Eingriff befindlichen Vorsprung aufweist und dass das Aufnahmeelement mit mindestens einer in einer parallel zur Nutebene befindlichen Ebene liegenden Federelement versehen ist. Zwischen den genannten Ebenen kann dementsprechend ein den Einbauverhältnissen entsprechender Abstand vorhanden sein. Die Nut ist beispielsweise als Ringnut ausführbar und kann im Wesentlichen senkrecht zur Seilzuglängsachse angeordnet werden beziehungsweise koaxial zur Seilzuglängsachse verlaufen.

Diese Kombination der Merkmale gestattet es, eine spezielle Einbaulage des Seilzuges vernachlässigen zu können. Egal in welcher Drehposition der zu montierende Seilzug sich befindet, hat der Vorsprung durch die umlaufende Gestaltung der Nut die Möglichkeit, eine Fixierung des Seilzuges in axialer Richtung zu bewirken, wobei das Federelement dabei ein Herausgleiten des Hüllenendstückes aus der Nut verhindert.

Besondere Ausgestaltungen des Gegenstandes der Erfindung ergeben sich zusätzlich aus den Merkmalen der Unteransprüche.

Es hat sich insbesondere als vorteilhaft erwiesen, wenn das Federelement zwei sich diametral gegenüber liegende Federzungen aufweist.

Eine bevorzugte Ausgestaltung des Gegenstandes der Erfindung sieht darüber hinaus vor, dass das Federelement eine im Wesentlichen U-förmige Ausnehmung mit einem Bodenbereich und zwei sich gegenüber liegenden elastischen Schenkelbereichen aufweist, wobei die Schenkelbereiche die Federzungen bilden und der Bodenbereich eine ringförmige dem Außendurchmesser des Hüllenendstückes angepasste Gestalt aufweist. Die U-förmige Gestaltung der Ausnehmung des Federelementes gestattet ein leichtes Einführen des Hüllenendabschnittes zwischen die sich gegenüber liegenden Federzungen, und ermöglicht gleichzeitig eine sichere Festlegung im Bodenbereich des Aufnahmeelementes.

In den Fällen, in denen die Schaltbetätigungs- oder Getriebebaugruppe ein Kunststoffgehäuse aufweist, kann das Aufnahmeelement zusammen mit dem Federelement einstückig mit dem jeweiligen Gehäuse ausgeführt werden. Auf diese Weise lässt sich die Anzahl der Einzelbauteile nochmals reduzieren sowie die Montage des Seilzuges vereinfachen.

Sollte das Gehäuse der Schaltvorrichtung aus einem metallischen Werkstoff hergestellt sein, so lässt sich das Federelement aus einem elastisch verformbaren Kunststoff oder einem federelastischen Metall herstellen.

Im Folgenden werden zwei Ausführungsbeispiele des Gegenstandes der Erfindung anhand der beigefügten Zeichnungen näher erläutert. Es zeigt:
- Figur 1:: eine perspektivische Darstellung einer ersten Ausgestaltungsvariante des Gegenstandes der Erfindung,
- Figur 2:: eine perspektivische Darstellung einer weiteren Ausgestaltungsvariante,
- Figur 3:: eine perspektivische Einzeldarstellung des zu befestigenden Endbereiches des Seilzuges
und
- Figur 4:: eine perspektivische Einzeldarstellung eines Teiles der Befestigungsvorrichtung.

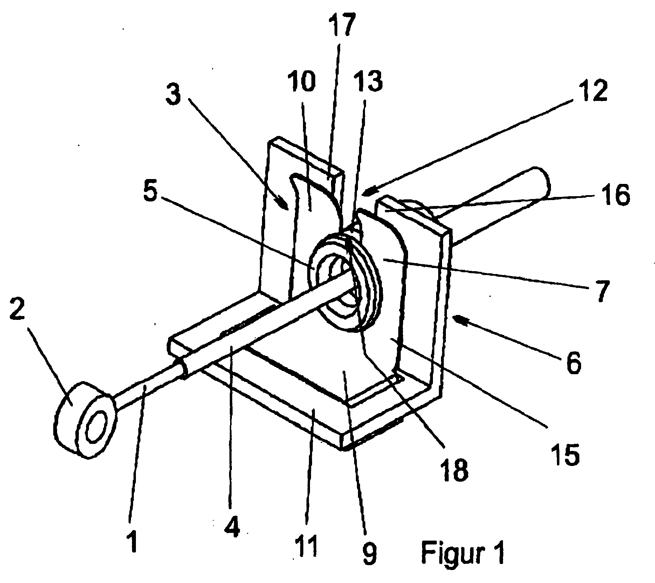

In der Darstellung der Figur 1 ist ein Seilzug 1 mit einem daran erkennbaren Befestigungsauge 2 zur Ankoppelung des Seilzuges an eine Schaltvorrichtung oder den Betätigungshebel eines Gertriebes zu sehen, der mittels einer in ihrer Gesamtheit mit 3 bezeichneten Befestigungsvorrichtung an einer nicht näher dargestellten Schaltbetätigung oder eines Getriebes eines Kraftfahrzeuges festgelegt ist. Der Seilzug 1 weist eine Hülle 4 auf, an welcher ein Hüllenendstück 5 befestigt ist. Das Hüllenendstück 5 wiederum ist in einem Aufnahmeelement 6 aufgenommen. Das Aufnahmeelement 6 besteht aus einem Federelement 15 und zwei als Seitenbegrenzungen einer U-förmigen Ausnehmung wirkenden Vorsprüngen 16 und 17, welche in montiertem Zustand des Seilzuges in eine umlaufende Nut 13 am Hüllenendstück 5 eingreifen und so eine axiale Verschiebung des Hüllenendstückes 5 in der Seilzuglängsachse verhindern.

Das Federelement weist im Wesentlichen eine winkelförmige Gestaltung mit zwei im Winkel von 90 Grad zueinander stehenden Schenkeln 9 und 10 auf. Der Schenkel 9 des Federelementes 15 ist hierbei an einem Gehäuseteil 11 der Schaltbetätigung festgelegt. Der im Winkel von 90 Grad angeordnete, etwa vertikal stehende Schenkel 10 nimmt - wie dies der Figur 1 zu entnehmen ist - in einer im Wesentlichen U-förmigen Ausnehmung 18 die Außenoberfläche des Hüllenendstückes 5 auf. Dadurch bildet der Schenkel 10 zwei Federzungen 7 und 8, welche in montiertem Zustand ein Herausrutschen des Hüllenendstückes aus dem Zwischenraum zwischen den Federzungen 7, 8 des Federelementes verhindern. Die Montage des Seilzuges 1 erfolgt hierbei durch Einschieben des mit der Nut 13 versehenen Hüllenendstückes in die U-förmige Ausnehmung 12 des Aufnahmeelementes 6 wobei gleichzeitig der Außendurchmesser des hierbei kreiszylinderförmigen Hüllenendstückes 5 in die Ausnehmung 18 des Federelementes 15 eingesetzt wird.

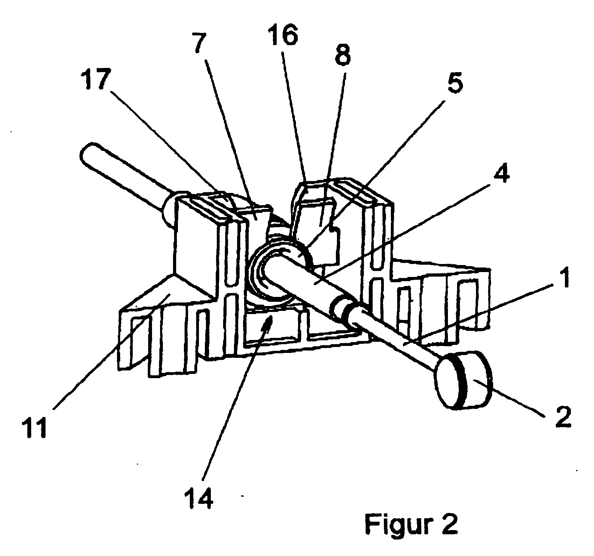

In der Figur 2 ist eine andere Ausgestaltungsvariante der Befestigungsvorrichtung dargestellt, bei der der Seilzug 1 mit Hülle 4 und Hüllenendstück 5 demjenigen der Figur 1 entspricht, das Aufnahmeelement 6 jedoch eine andere Bauweise aufweist. Die Ausgestaltungsvariante der Figur 2 bezieht sich auf solche Schaltbetätigungen, deren Gehäuse 11 aus Kunststoff gefertigt ist. Das Kunststoffmaterial des Gehäuseteiles 11 ermöglicht es, die Federzungen 7 und 8 sowie die Vorsprünge 16 und 17 einstückig mit diesem zu fertigen. Die Federzungen 7 und 8 weisen in diesem Ausführungsbeispiel eine im Wesentlichen rechteckförmige Gestalt auf, und ragen nach innen aus einer im Wesentlichen U-förmigen Ausnehmung 14 des Gehäuseteiles 11 hervor. Mit ihren vorstehenden freien Enden übergreifen die Federzungen 7 und 8 wiederum analog der Darstellung der Figur 1 das Hüllenendstück 5 in seiner Einbauposition.

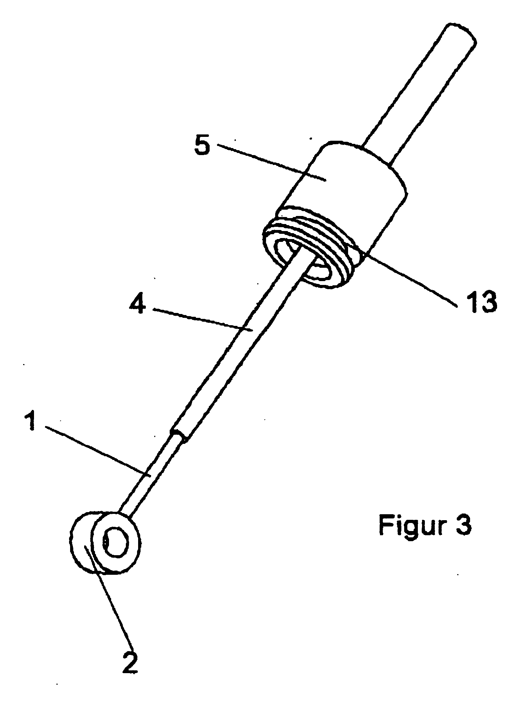

In der Darstellung der Figur 3 ist noch einmal das an der Schaltbetätigung festzulegende Ende des Seilzuges 1 ohne angrenzende Bauteile dargestellt. Es wird aus dieser Figur noch einmal die umlaufende Nut 13 des Hüllenendstückes 5 deutlich, welche im Zusammenspiel mit den weiter oben geschilderten Federzungen eine Festlegung des Seilzuges an der Schaltbetätigung eines Getriebes ermöglicht.

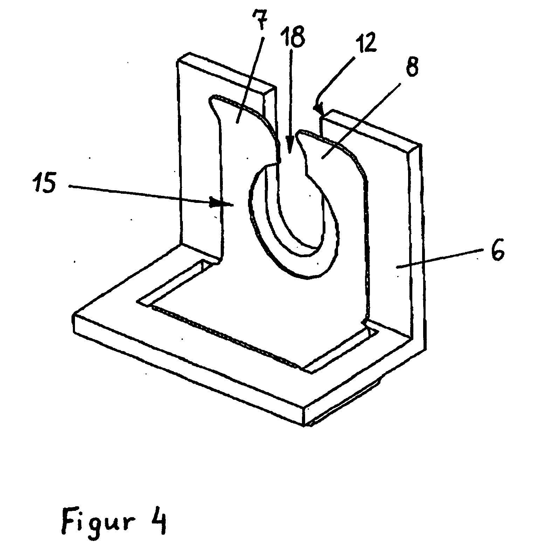

Die Figur 4 zeigt ausschnittsweise eine perspektivische Ansicht einer Befestigungsvorrichtung nach Figur 1, jedoch ohne den darin aufgenommenen Seilzug. Das Federelement 15 weist hierbei zwei Federzungen 7 und 8 auf, die durch eine schlitzförmige Ausnehmung 18 getrennt sind. Die Ausnehmung 18 geht in ihrem weiteren Verlauf in eine kreisförmige Öffnung über, deren Durchmesser den Abmessungen der Außenoberfläche des Hüllenendstückes 5 entspricht. Die Breite der in der Perspektive hinter dem Federblech 15 erkennbaren Ausnehmung 12 des Aufnahmeelementes 6 entspricht dabei in etwa dem Nutgrunddurchmesser der Nut 13. Somit wird der Seilzug über die Nutverbindung seines Hüllenendstückes 5 in axialer Richtung in dem Aufnahmeelement 6 gesichert, wobei das Federelement 15 dazu dient, ein selbsttätiges Lösen des Hüllenendstückes 5 und damit des Seilzuges 1 aus der Ausnehmung 12 zu verhindern. Es bildet damit eine Verliersicherung.

### Bezugszeichenliste

- 1.: Seilzug
- 2.: Befestigungsauge
- 3.: Befestigungsvorrichtung
- 4.: Hülle
- 5.: Hüllenendstück
- 6.: Aufnahmeelement
- 7.: Federzunge
- 8.: Federzunge
- 9.: Schenkel
- 10.: Schenkel
- 11.: Gehäuseteil
- 12.: Ausnehmung
- 13.: Nut
- 14.: Ausnehmung
- 15.: Federelement
- 16.: Vorsprung
- 17.: Vorsprung
- 18.: Ausnehmung

## Patentansprüche

1. Befestigungsvorrichtung zur Festlegung eines Seilzuges an einer Schaltbetätigung oder einem Getriebe mit einem den Seilzug ummantelnden Hüllenendstück und einem das Hüllenendstück aufnehmenden Aufnahmeelement an der Schaltbetätigung oder dem Getriebe, wobei das Hüllenendstück (5) eine umlaufende Nut aufweist,
**dadurch gekennzeichnet, dass**
das Aufnahmeelement (6) mindestens einen im festgelegten Zustand des Seilzuges (1) in der Nut (13) in Eingriff befindlichen Vorsprung (16, 17) aufweist und dass das Aufnahmeelement (6) mit mindestens einem in einer einzigen parallel zur Nutebene befindlichen Ebene liegenden Federelement (15) versehen ist.

2. Befestigungsvorrichtung nach Anspruch 1,
**dadurch gekennzeichnet, dass**
das Federelement (15) zwei sich diametral gegenüber liegende Federzungen (7, 8) aufweist.

3. Befestigungsvorrichtung nach Anspruch 2,
**dadurch gekennzeichnet, dass**
das Federelement (15) eine im Wesentlichen U-förmige Ausnehmung (18) mit einem Bodenbereich und zwei sich gegenüber liegenden elastischen Schenkelbereichen aufweist, wobei die Schenkelbereiche die Federzungen (7, 8) bilden und der Bodenbereich eine ringförmige dem Außendurchmesser des Hüllenendstückes (5) angepasste Größe aufweist.

4. Befestigungsvorrichtung nach einem der Ansprüche 1 bis 3,
**dadurch gekennzeichnet, dass**
das Aufnahmeelement (6) zusammen mit dem Federelement (15) einstückig mit der Schaltbetätigung ausgebildet ist.

5. Befestigungsvorrichtung nach einem der Ansprüche 1 bis 3,
**dadurch gekennzeichnet, dass**
das Federelement (15) aus einem elastisch verformbaren Kunststoff besteht.

6. Befestigungsvorrichtung nach einem der Ansprüche 1 bis 3,
**dadurch gekennzeichnet, dass**
das Federelement (15) aus einem federelastischen Metall besteht.

## Claims

1. Fixing device for securing an actuator cable on a shift actuator or a gearbox, with a sleeve end-piece enclosing the actuator cable and a receiving element accommodating the sleeve end-piece on the shift actuator or gearbox, the sleeve end-piece (5) having a peripheral groove,
**characterised in that**
the receiving element (6) has at least one projection (16, 17) which engages in the groove (13) when the actuator cable (1) is secured and the receiving element (6) is provided with at least one spring element (15) lying in a plane parallel with the groove plane.

2. Fixing device as claimed in claim 1,
**characterised in that**
the spring element (15) has two diametrically opposed spring blades (7, 8).

3. Fixing device as claimed in claim 2,
**characterised in that**
the spring element (15) has an essentially U-shaped cut-out (18) with a base region and two opposing elastic leg regions, which leg regions form the spring blades (7, 8), and the base region is annular, being of a size adapted to the external diameter of the sleeve end-piece (5).

4. Fixing device as claimed in one of claims 1 to 3,
**characterised in that**
the receiving element (6) incorporating the spring element (15) is made integrally with the shift actuator.

5. Fixing device as claimed in one of claims 1 to 3,
**characterised in that**
the spring element (15) is made from an elastically deformable plastic.

6. Fixing device as claimed in one of claims 1 to 3,
**characterised in that**
the spring element (15) is made from a resilient elastic metal.

## Revendications

1. Dispositif de fixation pour fixer un câble de commande sur une commande de commutation ou un engrenage avec un embout de gaine enveloppant le câble de commande et un élément de réception recevant l'embout de gaine sur la commande de commutation ou sur l'engrenage, l'embout de gaine (5) comportant une rainure circulaire,
**caractérisé en ce que** l'élément de réception (6) comporte au moins une partie en saillie (16, 17) se trouvant en prise dans la rainure (13)lorsque le câble de commande (1) est à l'état fixé, et **en ce que** l'élément de réception (6) est pourvu d'au moins un élément à ressort (15) situé sur un seul plan étant parallèle au plan de la rainure.

2. Dispositif de fixation selon la revendication 1,
**caractérisé en ce que**
l'élément à ressort (15) comporte deux lames flexibles (7, 8) diamétralement opposées.

3. Dispositif de fixation selon la revendication 2,
**caractérisé en ce que**
l'élément à ressort (15) comporte un évidement (18) sensiblement en forme de U présentant une zone de fond et deux zones latérales élastiques opposées, les zones latérales formant les lames flexibles (7,8) et la zone de fond comportant une taille circulaire adaptée au diamètre de l'embout de gaine(5).

4. Dispositif de fixation selon l'une quelconque des revendications 1 à 3,
**caractérisé en ce que**
l'élément de réception (6) est formé conjointement avec l'élément à ressort (15) d'un seul tenant avec la commande de commutation.

5. Dispositif de fixation selon l'une quelconque des revendications 1 à 3,
**caractérisé en ce que**
l'élément à ressort (15) est composé d'une matière plastique élastique déformable.

6. Dispositif de fixation selon l'une quelconque des revendications 1 à 3,
**caractérisé en ce que**
l'élément à ressort (15) est composé d'un métal à déformation.
